# EUROPEAN PATENT SPECIFICATION

(11) **EP 4 391 178 B1**
(45) Date of publication and mention of the grant of the patent: **26.11.2025**
(21) Application number: 22918331.4
(22) Date of filing: 06.12.2022
(51) Int. Cl.: H01M 50/244, H01M 50/249, H01M 50/258, B60K 1/04

(54) **PACKAGING BOX, BATTERY, AND ELECTRIC DEVICE**
VERPACKUNGSSCHACHTEL, BATTERIE UND ELEKTRISCHE VORRICHTUNG
BOÎTIER D'ENCAPSULATION, BATTERIE ET DISPOSITIF ÉLECTRIQUE

(30) Priority: 05.01.2022 CN 202220013841 U
(43) Date of publication of application: 26.06.2024
(73) Proprietor: Contemporary Amperex Technology (Hong Kong) Limited, Central, Central And Western District (HK)
(72) Inventor: LIN, Zhiqiang, Ningde City, Fujian 352100 (CN); LIN, Zhiquan, Ningde City, Fujian 352100 (CN); HUANG, Shengguo, Ningde City, Fujian 352100 (CN); SUN, Yangyang, Ningde City, Fujian 352100 (CN)
(74) Representative: Gong, Jinping
(86) International application number: PCT/CN2022/136966
(87) International publication number: WO 2023/130879

(56) References cited:
- CN-A- 113 161 664
- CN-A- 113 745 740
- CN-U- 211 315 351
- CN-U- 213 268 136
- CN-U- 216 671 825
- US-A1- 2015 174 996
- US-A1- 2021 309 090
- US-B2- 11 005 137

## Description

### CROSS-REFERENCE TO RELATED APPLICATIONS

This application claims priority to Chinese Patent Application No. 202220013841.6, filed on January 5, 2022 and entitled "PACKAGING BOX, BATTERY, AND ELECTRICAL DEVICE".

### TECHNICAL FIELD

This application relates to the field of batteries, and in particular, to a packaging box, a battery, and an electrical device.

### BACKGROUND

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

A battery pack box of a vehicle usually needs to be latched to a frame of the vehicle by bolts. The rim of the battery pack box needs to extend outward for a length to be connected to a liner nut. The liner nut is typically fixed to the rim of the battery pack box through an interference fit and glue. The interference-fit mounting is difficult to operate and involves clean-up of overflow glue, thereby impairing the mounting efficiency in the vehicle.

Document US2021/309090A1 represents the closest prior art and discloses the features of the preamble of claim 1.

### SUMMARY

In view of the above problem, this application provides a packaging box, a battery, and an electrical device to alleviate the inconvenience of mounting the box in a vehicle.

According to a first aspect, this application provides a packaging box, including a box body, a ferrule, and a sleeve. An accommodation cavity, a first opening, and a second opening are created in the box body. Both the first opening and the second opening communicate with the accommodation cavity. The sleeve includes a first cap, a second cap, and a cylinder. The first cap and the second cap are connected to two ends of the cylinder respectively. The cylinder is configured to be snap-fastened to the ferrule. The first cap and the second cap protrude beyond the ferrule. The ferrule is configured to be inserted into the accommodation cavity from the first opening and snap-fastened in the accommodation cavity. The first cap is configured to extend from the second opening and be exposed outside the box body.

In the technical solution in an embodiment of this application, through the first opening and the second opening, the cylinder and the second cap enter the accommodation cavity from the first opening and are snap-fastened in the accommodation cavity. The first cap protrudes beyond the second opening and abuts on the outer surface of the box body. In this way, the ferrule, the sleeve, and the box body are fixed relatively. The mounting method is simple and can effectively improve the mounting efficiency of the packaging box in a vehicle. In addition, both the ferrule and the sleeve are detachable from the box body, thereby facilitating subsequent maintenance.

In some embodiments, the ferrule includes a first snap portion, a second snap portion, and a bend portion. Two ends of the bend portion are connected to the first snap portion and the second snap portion respectively. The first snap portion, the bend portion, and the second snap portion close in together to form a clamping trough that is openable and closable. The cylinder is configured to be snap-fastened in the clamping trough. The cylinder needs to be detachably connected to the ferrule to facilitate subsequent disassembling and maintenance of the box body. The first snap portion and the second snap portion are disposed opposite to each other. The bend portion, the first snap portion, and the second snap portion may be all made of an elastic material. In this way, the first snap portion, the bend portion, and the second snap portion close in together to form a clamping trough that is openable and closable. The cylinder can be clamped tightly in the clamping trough. In the clamped state, the cylinder abuts between the first snap portion, the second snap portion, and the bend portion.

In some embodiments, the ferrule includes a first strap and a second strap. One end of the first strap is connected to the first snap portion, another end of the first strap extends toward the clamping trough, and a snap slot is created on the first strap. One end of the second strap is connected to the second snap portion, and another end of the second strap extends toward the clamping trough. A protruding portion is disposed protrusively on the second strap, and the protruding portion is configured to be snap-fastened in the snap slot so that the first strap is snap-fastened to the second strap. When the cylinder is clamped in the clamping trough, the first strap and the second strap are connected to each other and clasped on the outer surface of the cylinder. At this time, the bend portion, the first snap portion, and the second snap portion, the first strap, and the second strap form a closed-loop clamped space to fix the cylinder.

In some embodiments, the first strap is bent toward a bottom of the clamping trough, and the second strap is bent toward the bottom of the clamping trough. Both straps are bent toward the bottom of the clamping trough, so as to make it convenient for the two straps to correspond to the bottom of the clamping trough when the two straps are connected together. In this way, the clamping forces exerted by the two straps on the cylinder counteract the clamping force exerted by the bottom of the clamping trough on the cylinder, so as to fix the cylinder in the clamping trough.

In some embodiments, along a direction in which the clamping trough is opened or closed, a length of the snap slot is greater than a length of the protruding portion, and the protruding portion is movable along the snap slot. By setting the length of the snap slot to be greater than the length of the protruding portion, a space is reserved for movement of the protruding portion. When the two snap portions are moving toward or away from each other to get engaged or disengaged, the protruding portion moves along the snap slot to prevent the straps from interfering with the engagement or disengagement between the two snap portions.

In some embodiments, a sidewall of the cylinder includes a curved face portion and a flat face portion. An inner wall of the bend portion fits the curved face portion. When the cylinder is snap-fastened to the clamping trough, the curved face portion of the cylinder fits snugly with the inner wall of the bend portion, and the flat face portion of the cylinder fits snugly with the first strap and/or the second strap. A part of the sidewall of the cylinder is made as a curved face portion, and another part of the sidewall is made as a flat face portion. The curved face portion matches the curved face of the bend portion. When the two straps are connected together, one or both of the straps abut on the flat face portion to limit the position of the cylinder and prevent rotation of the cylinder relative to the ferrule.

In some embodiments, a first abutment portion extends from an end of the first snap portion, the end being oriented back from the bend portion, and the first abutment portion is bent away from the clamping trough. A second abutment portion extends from an end of the second snap portion, the end being oriented back from the bend portion, and the second abutment portion is bent away from the clamping trough. A first fixing groove and a second fixing groove are created in the accommodation cavity. When the ferrule is snap-fastened in the accommodation cavity, the first abutment portion is inserted into the first fixing groove, and the second abutment portion is inserted into the second fixing groove. By disposing two abutment portions and two fixing grooves, the ferrule is provided with a force exertion point in the accommodation cavity, thereby making it convenient to limit the position of the ferrule.

In some embodiments, the ferrule further includes a first limiting portion and a second limiting portion. The first limiting portion is connected to the first snap portion and protrudes beyond an end face of the first snap portion, the end face being oriented back from the clamping trough. The second limiting portion is connected to the second snap portion and protrudes beyond an end face of the second snap portion, the end face being oriented back from the clamping trough. A limiting wall is disposed in the accommodation cavity. Both the first limiting portion and the second limiting portion are snap-fastened to the limiting wall so that the ferrule is fixed in the accommodation cavity. When entering the accommodation cavity, the ferrule is in a compressed state. Therefore, the two snap portions of the ferrule will move away from each other after entering the accommodation cavity. In this way, the limiting portions on the two snap portions are snap-fastened to the limiting wall, so as to fix the ferrule to the accommodation cavity.

In some embodiments, the first limiting portion includes a first limiting base and a second limiting base disposed opposite to each other, and a first limiting space exists between the first limiting base and the second limiting base. The second limiting portion includes a third limiting base and a fourth limiting base disposed opposite to each other, and a second limiting space exists between the third limiting base and the fourth limiting base. The limiting wall includes a first rib wall and a second rib wall, the first rib wall and the second rib wall are disposed opposite to each other. When the ferrule is snap-fastened in the accommodation cavity, the first rib wall is snap-fastened in the first limiting space between the first limiting base and the second limiting base, and the second rib wall is snap-fastened in the second limiting space between the third limiting base and the fourth limiting base. The ferrule is fixed in the Y-direction by the grip of the first rib wall by the first limiting base and the second limiting base, and by the grip of the second rib wall by the third limiting base and the fourth limiting base.

In some embodiments, the first opening communicates with the second opening. A relief hole is created on the box body. The relief hole communicates with the first opening. When the cylinder enters the accommodation cavity from the first opening, the second cap enters the accommodation cavity from the relief hole. The relief holes are created on both sides at the bottom of the first opening, and all the relief holes communicate with the first opening, so that the second cap enters the accommodation cavity from the relief holes when the ferrule enters the accommodation cavity from the first opening.

In some embodiments, the bend portion, the first snap portion, and the second snap portion are all made of an elastic material. In this way, the first snap portion, the bend portion, and the second snap portion close in together to form a clamping trough that is openable and closable.

In some embodiments, a curvature of the bend portion is set to match a curvature of an outer surface of the cylinder to facilitate increase of the contact area between the bend portion and the cylinder.

In some embodiments, an overall width of the ferrule is greater than a width of the first opening and a width of the second opening separately, and an overall length of the ferrule is greater than a length of the second opening, so as to prevent the ferrule from falling out of the first opening or the second opening.

According to a second aspect, this application provides a battery. The battery includes the packaging box according to the foregoing embodiment.

According to a third aspect, this application provides an electrical device. The electrical device includes the battery according to the foregoing embodiment.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

FIG. 1 is an exploded view of a packaging box according to some embodiments of this application;
FIG. 2 is a schematic structural diagram of a packaging box according to some embodiments of this application;
FIG. 3 is a schematic diagram of an internal structure of a packaging box according to some embodiments of this application;
FIG. 4 is a schematic structural diagram of a box body according to some embodiments of this application;
FIG. 5 is a schematic structural diagram of a ferrule according to some embodiments of this application;
FIG. 6 is a top view of a ferrule according to some embodiments of this application;
FIG. 7 is a schematic structural diagram of a sleeve according to some embodiments of this application; and
FIG. 8 is a front view of a sleeve according to some embodiments of this application.

List of reference numerals:
100. box body;
110. first sidewall; 111. first opening;
120. second sidewall; 121. second opening;
130. accommodation cavity; 131. first fixing groove; 132. second fixing groove;
140. first rib wall; 150. second rib wall; 160. relief hole;
200. ferrule;
210. first snap portion; 220. second snap portion;
230. bend portion; 240. clamping trough;
250. first strap; 251. snap slot; 252. first abutment portion;
260. second strap; 261. protruding portion; 262. second abutment part;
270. first limiting portion; 271. first limiting base; 272. second limiting base;
280. second limiting portion; 281. third limiting base; 282. fourth limiting base;
300. sleeve;
310. first cap; 320. second cap;
330. cylinder; 331. curved face portion; 332. flat face portion.

### DETAILED DESCRIPTION OF EMBODIMENTS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

The packaging box of a battery pack is usually fixed to a vehicle frame by bolting. The rim of the box body needs to extend outward for a length to be connected to a liner nut. The existing liner nut is usually mounted in the following way: the liner nut is fixed to the rim of the box body by an interference fit plus glue or welding. The applicant of this application finds that it is difficult to determine an appropriate interference amount in the interference mounting. A relatively large interference amount causes the rim surface in contact with the liner to collapse, deform or even crack. A relatively small interference amount leads to an overly small pull-out force of the liner in the direction of the liner. In addition, the overflow glue needs to be cleaned up after gluing, thereby resulting in a low production efficiency. The welding is prone to cracks and a decrease in the strength of the rim.

To alleviate the problem of inconvenient mounting of the liner nut and the rim, the applicant hereof finds through research that the liner nut may be mounted through quick side insertion to improve the mounting efficiency.

The packaging box disclosed herein is applicable to, but not limited to use in, electrical devices such as a vehicle, watercraft, or aircraft. A power supply system of such electrical devices may be formed by using a battery containing the packaging box disclosed herein.

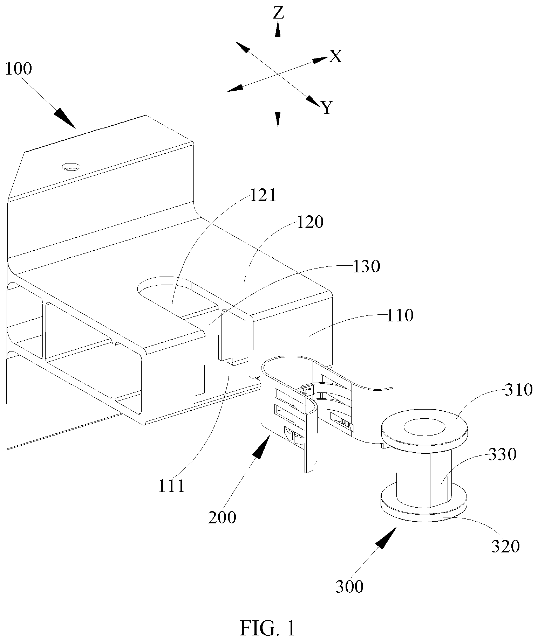

An embodiment of this application provides a packaging box. Referring to FIG. 1, the packaging box includes a box body 100 (the entire box body is not shown), a ferrule 200, and a sleeve 300.

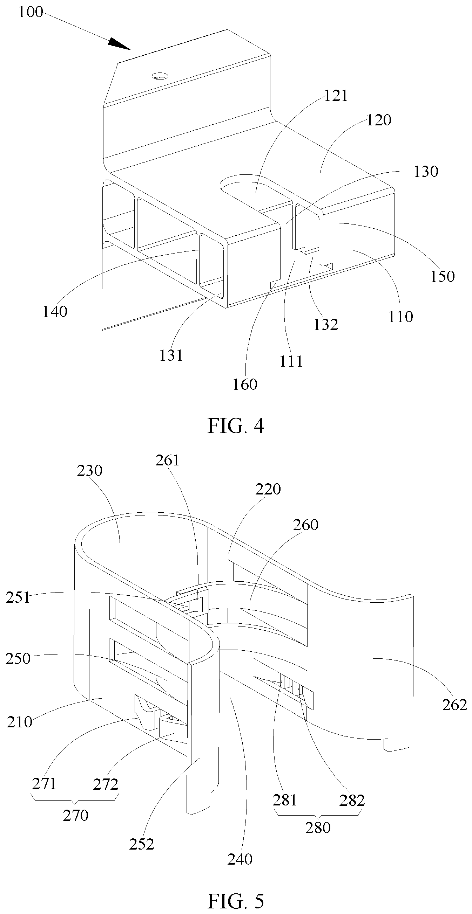

Referring to FIG. 1 and FIG. 4, a part of the rim of the box body 100 may extend outward for a length to serve as a mounting point of the box body 100. As shown in FIG. 4, the box body 100 includes a first sidewall 110 and a second sidewall 120. The first sidewall 110 and the second sidewall 120 are fixedly connected. When the box body 100 is mounted on the vehicle frame, the first sidewall 110 is disposed vertically, and the second sidewall 120 is disposed horizontally. An accommodation cavity 130 is formed between the first sidewall 110 and the second sidewall 120 by the sidewalls around. A first opening 111 is created on the first sidewall 110, and a second opening 121 is created on the second sidewall 120. Both the first opening 111 and the second opening 121 communicate with the accommodation cavity 130. The first opening 111 extends toward the second sidewall 120, and the second opening 121 extends toward the first sidewall 110. The two openings 111 and 121 meet at the junction of the two sidewalls 110 and 120, and communicate with each other.

Referring to FIG. 1 and FIG. 5, the ferrule 200 is configured to be snap-fastened in the accommodation cavity 130. The ferrule 200 includes two snap portions 210 and 220 disposed opposite to each other. The two snap portions 210 and 220 can move toward or away from each other. The sleeve 300 may be snap-fastened in the two snap portions 210 and 220 of the ferrule 200. The ferrule 200 can position and clamp the sleeve 300.

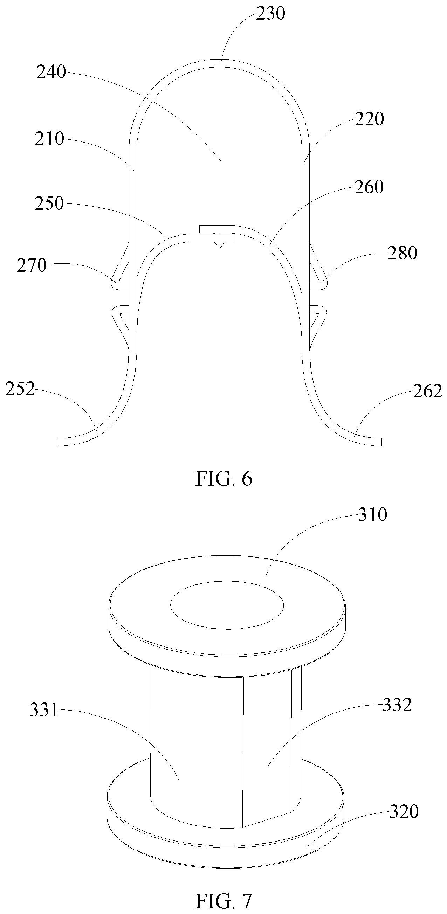

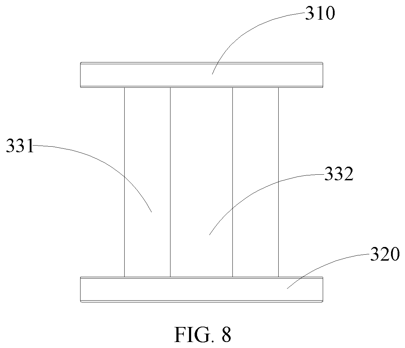

Referring to FIG. 1 and FIG. 7, the sleeve 300 includes a first cap 310, a second cap 320, and a cylinder 330. Both the first cap 310 and the second cap 320 may be in a flat column shape. The diameters of the two caps 310 and 320 may be identical. Understandably, the outer contours of the first cap 310 and the second cap 320 may be in other shapes, such as a flat cuboidal shape or a flat triangular shape. The cylinder 330 may be in a cylindrical shape. The first cap 310 and the second cap 320 may be fixed to two ends of the cylinder 330 respectively. The axes of the first cap 310 and the second cap 320 may coincide with the axis of the cylinder 330. As shown in FIG. 8, the diameters of both caps 310 and 320 are greater than the diameter of the cylinder 330, so that when the two caps 310 and 320 are connected to the two ends of the cylinder 330 respectively, a radial projection of the sleeve 300 is approximately H-shaped.

Referring to FIG. 1 to FIG. 3, the sleeve 300 may be snap-fastened to the ferrule 200. Both ends of the cylinder 330 extend beyond the ferrule 200, so that both the first cap 310 and the second cap 320 protrude beyond the ferrule 200. As shown in FIG. 7, the first cap 310 and the second cap 320 are located at the upper end and the lower end of the ferrule 200 respectively. When the sleeve 300 is snap-fastened in the ferrule 200, the two snap portions 210 and 220 of the ferrule 200 may be stressed to come closer to each other to reduce the overall dimensions of the ferrule 200. The shape of the first opening 111 fits the outer contour of the ferrule 200. When the ferrule 200 is stressed until the width of the ferrule is less than the width of the first opening 111, the first opening 111 of the ferrule 200 may be inserted into the accommodation cavity 130. At this time, the second cap 320 also enters the accommodation cavity 130 from the first opening 111, and the first cap 310 extends beyond the outer surface of the second sidewall 120 from the second opening 121. When the ferrule 200 fully enters the accommodation cavity 130, the two snap portions 210 and 220 of the ferrule 200 may be released. The two snap portions 210 and 220 of the ferrule 200 abuts on and is fixed to the accommodation cavity 130. After the ferrule 200 is released, referring to FIG. 1, the overall width (X-direction) of the ferrule 200 is greater than the width of the first opening 111 and the width of the second opening 121 (X-direction) separately, and the overall length (Y-direction) of the ferrule 200 is greater than the length (Y-direction) of the second opening 121, so as to prevent the ferrule 200 from falling out of the first opening 111 or the second opening 121. After the ferrule 200 is fixed, the first cap 310 abuts on the bottom of the ferrule 200, and the second cap 320 is exposed on the outer surface of the box body 100. By connecting the sleeve 300 and the vehicle frame with bolts, the packaging box can be mounted onto the vehicle frame.

It is hereby noted that the width means a dimension along the X-direction in FIG. 1, and the length means a dimension along the Y-direction in FIG. 1. In addition, when the sleeve 300 is snap-fastened in the ferrule 200, an appropriate amount of movement space in the Z-direction needs to be reserved. As shown in FIG. 1, along the Z-direction, the height of the cylinder 330 is greater than the height of the ferrule 200. When the second cap 320 abuts on the bottom of the ferrule 200, a clearance exists between the first cap 310 and the top of the ferrule 200. The clearance is configured to clamp a thickness of the second sidewall 120. When the second sidewall 120 is clamped in the clearance, the first cap 310 is in close contact with the outer surface of the second sidewall 120 to alleviate the problem of bolt torque attenuation caused by the clearance during the latching.

Understandably, the sleeve 300 in this application is inserted into the rim of the box body 100 from a lateral face of the box body 100. As required, the outline dimension of the first cap 310 may be adjusted to increase a crimping area between the first cap 310 and the rim of the box body 100, thereby effectively reducing the risk that the rim of the box body is crushed and the mounting bolt torque of the vehicle is attenuated.

According to some embodiments of this application, referring to FIG. 1 to FIG. 3, when the ferrule 200 needs to be detached, the two snap portions 210 and 220 of the ferrule 200 may be stressed to come closer to each other again to reduce the overall width of the ferrule 200. In this way, the ferrule 200 can fall out from the first opening 111, thereby implementing detachable mounting of the ferrule 200.

Through the first opening 111 and the second opening 121 disposed, the cylinder 330 and the second cap 320 enter the accommodation cavity 130 from the first opening 111 and are snap-fastened in the accommodation cavity. The first cap 310 protrudes beyond the second opening 121 and abuts on the outer surface of the box body 100. In this way, the ferrule 200, the sleeve 300, and the box body 100 are fixed relatively. The mounting method is simple and can effectively improve the mounting efficiency of the packaging box in a vehicle. In addition, both the ferrule 200 and the sleeve 300 are detachable from the box body 100, thereby facilitating subsequent maintenance.

According to some embodiments of this application, referring to FIG. 5 and FIG. 6, the ferrule 200 includes a first snap portion 210, a second snap portion 220, and a bend portion 230. The first snap portion 210, the bend portion 230, and the second snap portion 220 close in together to form a clamping trough 240 that is openable and closable. The cylinder 330 is configured to be snap-fastened in the clamping trough 240.

The cylinder 330 needs to be detachably connected to the ferrule 200 to facilitate subsequent detachment and maintenance of the box body 100. The bend portion 230 may be arc-shaped. Two ends of the arc-shaped bend portion 230 are connected to the first snap portion 210 and the second snap portion 220 respectively. The first snap portion 210 and the second snap portion 220 are disposed opposite to each other. The bend portion 230, the first snap portion 210, and the second snap portion 220 may be all made of an elastic material. In this way, the first snap portion 210, the bend portion 230, and the second snap portion 220 close in together to form a clamping trough 240 that is openable and closable. The cylinder 330 can be clamped tightly in the clamping trough 240. In the clamped state, the cylinder 330 abuts between the first snap portion 210, the second snap portion 220, and the bend portion 230. A curvature of the bend portion 230 is set to match a curvature of an outer surface of the cylinder 330 to facilitate increase of the contact area between the bend portion 230 and the cylinder 330.

According to some embodiments of this application, referring to FIG. 5 and FIG. 6, the ferrule 200 includes a first strap 250 and a second strap 260. One end of the first strap 250 is connected to the first snap portion 210, and another end of the first strap 250 extends toward the clamping trough 240. A snap slot 251 is created on the first strap 250. One end of the second strap 260 is connected to the second snap portion 220, and another end of the second strap 260 extends toward the clamping trough 240. A protruding portion 261 is disposed protrusively on the second strap 260, and the protruding portion 261 is configured to be snap-fastened in the snap slot 251 so that the first strap 250 is snap-fastened to the second strap 260.

When the cylinder 330 is snap-fastened in the ferrule 200, an external force may cause the cylinder 330 to fall off the ferrule 200. Therefore, a closed-loop clamping trough 240 needs to be disposed to fix the cylinder 330.

For example, a first strap 250 extends from the first snap portion 210, and a second strap 260 extends from the second snap portion 220. Both the first strap 250 and the second strap 260 extend toward the interior of the clamping trough 240. The two straps 250 and 260 are detachably connected. When the cylinder 330 is clamped in the clamping trough 240, the first strap 250 and the second strap 260 are connected to each other and clasped on the outer surface of the cylinder 330. At this time, the bend portion 230, the first snap portion 210, and the second snap portion 220, the first strap 250, and the second strap 260 form a closed-loop clamped space to fix the cylinder 330.

Specifically, a snap slot 251 may be created on the first strap 250, and a protruding portion 261 may be disposed on the second strap 260. The protruding portion 261 may be snap-fastened in the snap slot 251 so that the two straps 250 and 260 are connected to each other. Understandably, in order to improve a clamping force of the ferrule 200 on the cylinder 330, a plurality of first straps 250 and a plurality of second straps 260 may be disposed. The number of the first straps 250 corresponds to the number of the second straps 260. The plurality of straps clamp the cylinder 330 concurrently to increase the clamping force.

According to some embodiments of this application, referring to FIG. 5 and FIG. 6, the first strap 250 is bent toward the bottom of the clamping trough 240, and the second strap 260 is bent toward the bottom of the clamping trough 240.

Understandably, the bottom of the clamping trough 240 is a curved concave surface of the bend portion 230. Because the first snap portion 210 and the second snap portion 220 are disposed opposite to each other, the clamping forces exerted by the two snap portions 210 and 220 on the cylinder 330 counteract each other, so as to fix the cylinder 330. Similarly, when the two straps 250 and 260 are connected, the forces exerted by the two straps on the cylinder 330 are preferably exerted in a direction toward the bottom of the clamping trough 240, so as to clamp the cylinder 330 from four directions.

Both straps 250 and 260 are bent toward the bottom of the clamping trough 240, so as to make it convenient for both straps 250 and 260 to correspond to the bottom of the clamping trough 240 when the two straps are connected together. In this way, the clamping forces exerted by the two straps 250 and 260 on the cylinder 330 counteract the clamping force exerted by the bottom of the clamping trough on the cylinder 330, so as to fix the cylinder 330 in the clamping trough 240.

According to some embodiments of this application, referring to FIG. 5, along a direction in which the clamping trough 240 is opened or closed, the length of the snap slot 251 is greater than the length of the protruding portion 261, and the protruding portion 261 is movable along the snap slot 251. It is hereby noted that, in this embodiment, the opening and closing direction of the clamping trough 240 is defined as the length direction of the snap slot 251. In this embodiment, the length direction of the snap slot 251 is the same as the X-direction in the preceding embodiment.

The two snap portions 210 and 220 are disposed opposite to each other. When the ferrule 200 is snap-fastened in the accommodation cavity 130, the two snap portions 210 and 220 need to be moved closer to each other. Because the first strap 250 and the second strap 260 are snap-fastened, the two straps 250 and 260 need to be separated from each other to move the two snap portions 210 and 220 closer to each other. To facilitate mounting, a space for movement of the protruding portion 261 needs to be reserved on the snap slot 251. When the two snap portions 210 and 220 are moving closer to each other, the protruding portion 261 on the second strap 260 may move along the snap slot 251 to prevent the straps from interfering with the two snap portions 210 and 220 moving closer to each other.

Referring to FIG. 1 and FIG. 5, by setting the length (X-direction) of the snap slot 251 to be greater than the length (X-direction) of the protruding portion 261, a space is reserved for movement of the protruding portion 261. When the two snap portions 210 and 220 are moving toward or away from each other to get engaged or disengaged, the protruding portion 261 moves along the snap slot 251 to prevent the straps from interfering with the engagement or disengagement between the two snap portions 210 and 220.

According to some embodiments of this application, referring to FIG. 1, FIG. 7, and FIG. 8, the sidewall of cylinder 330 includes a curved face portion 331 and a flat face portion 332. An inner wall of the bend portion 230 fits the curved face portion 331. When the cylinder 330 is snap-fastened to the clamping trough 240, the curved face portion 331 of the cylinder 330 fits snugly with the inner wall of the bend portion 230, and the flat face portion 332 of the cylinder 330 fits snugly with the first strap 250 and/or the second strap 260.

Understandably, when the cylinder 330 is exactly in a cylindrical shape, the cylinder is very prone to rotate relative to the ferrule 200. Therefore, the position of the cylinder 330 needs to be limited.

In this embodiment, a part of the sidewall of the cylinder 330 is made as a curved face portion 331, and another part of the sidewall is made as a flat face portion 332. The curved face portion 331 matches the curved face of the bend portion 230. When the two straps 250 and 260 are connected together, one or both of the straps 250 and 260 abut on the flat face portion 332 to limit the position of the cylinder 330 and prevent rotation of the cylinder 330 relative to the ferrule 200.

According to some embodiments of this application, referring to FIG. 1, FIG. 4, and FIG. 5, a first abutment portion 252 extends from an end of the first snap portion 210, the end being oriented back from the bend portion 230. The first abutment portion 252 is bent away from the clamping trough 240. A second abutment portion 262 extends from an end of the second snap portion 220, the end being oriented back from the bend portion 230. The second abutment portion 262 is bent away from the clamping trough 240. A first fixing groove 131 and a second fixing groove 132 are created in the accommodation cavity 130. When the ferrule 200 is snap-fastened in the accommodation cavity 130, the first abutment portion 252 is inserted into the first fixing groove 131, and the second abutment portion 262 is inserted into the second fixing groove 132.

When the ferrule 200 is snap-fastened in the accommodation cavity 130, the position of the ferrule 200 needs to be limited, so as to fix the ferrule 200. In this embodiment, as shown in FIG. 6, the first abutment portion 252 and the second abutment portion 262 are disposed opposite to each other. Both the first abutment portion 252 and the second abutment portion 262 are arc-shaped. As can be seen from FIG. 4, a first fixing groove 131 and a second fixing groove 132 are created in the accommodation cavity 130. The two fixing grooves 131 and 132 are located on the two sides of the first opening 111 respectively. When the ferrule 200 is snap-fastened in the accommodation cavity 130, the first abutment portion 252 extends into the first fixing groove 131, and the second abutment portion 262 extends into the second fixing groove 132. Understandably, the two fixing grooves 131 and 132 may be disposed on the first sidewall 100 instead. The curved faces of the two abutment portions 252 and 262 abut against the inner surface of the first sidewall 110 separately to limit the position of the ferrule 200.

By disposing two abutment portions 252 and 262 and two fixing grooves 131 and 132, the ferrule 200 is provided with a force exertion point in the accommodation cavity 130, thereby making it convenient to limit the position of the ferrule 200.

According to some embodiments of this application, referring to FIG. 5, the ferrule 200 further includes a first limiting portion 270 and a second limiting portion 280. The first limiting portion 270 is connected to the first snap portion 210 and protrudes beyond an end face of the first snap portion 210, the end face being oriented back from the clamping trough 240. The second limiting portion 280 is connected to the second snap portion 220 and protrudes beyond an end face of the second snap portion 220, the end face being oriented back from the clamping trough 240. A limiting wall is disposed in the accommodation cavity 130. Both the first limiting portion 270 and the second limiting portion 280 are snap-fastened to the limiting wall so that the ferrule 200 is fixed in the accommodation cavity 130.

Referring to FIG. 1, when the ferrule 200 is snap-fastened in the accommodation cavity 130, it is obviously difficult to completely fix the ferrule 200 in the Y-direction by relying on just the two abutment portions 252 and 262 for limiting the position of the ferrule 200. For convenience of fixing the ferrule 200 in the Y-direction, a limiting component needs to be disposed in the Y-direction of the ferrule 200.

When entering the accommodation cavity 130, the ferrule 200 is in a compressed state. Therefore, the two snap portions 210 and 220 of the ferrule 200 will move away from each other after entering the accommodation cavity 130. In this way, the limiting portions on the two snap portions 210 and 220 are snap-fastened to the limiting wall, so as to fix the ferrule 200 to the accommodation cavity 130.

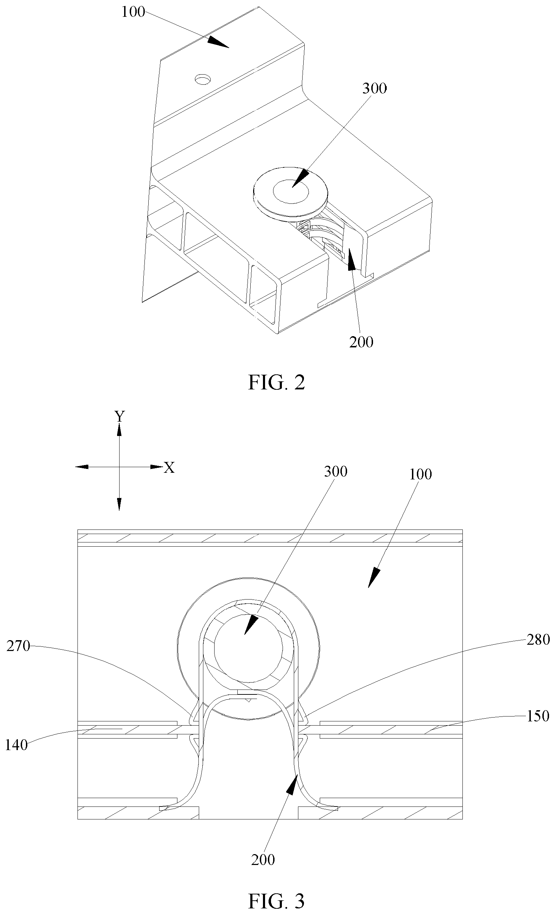

According to some embodiments of this application, further, referring to FIG. 5, the first limiting portion 270 may include a first limiting base 271 and a second limiting base 272 disposed opposite to each other. A first limiting space exists between the first limiting base 271 and the second limiting base 272. The second limiting portion 280 may include a third limiting base 281 and a fourth limiting base 282 disposed opposite to each other. A second limiting space exists between the third limiting base 281 and the fourth limiting base 282. As can be seen from FIG. 3, in order to facilitate position limiting in the Y-direction, the first limiting base 271 and the second limiting base 272 are arranged along the Y-direction, and the third limiting base 281 and the fourth limiting base 282 are also arranged along the Y-direction. Moreover, the limiting wall is set to include a first rib wall 140 and a second rib wall 150. The first rib wall 140 and the second rib wall 150 are disposed opposite to each other on two sides of the second opening 121. Both rib walls 140 and 150 are parallel to the X-direction and are vertical.

When the ferrule 200 is snap-fastened in the accommodation cavity 130, the first rib wall 140 is snap-fastened in the first limiting space between the first limiting base 271 and the second limiting base 272. The first limiting base 271 and the second limiting base 272 jointly clamp the first rib wall 140. The second rib wall 150 is snap-fastened in the second limiting space between the third limiting base 281 and the fourth limiting base 282. The third limiting base 281 and the fourth limiting base 282 jointly clamp the second rib wall 150.

The ferrule 200 is fixed in the Y-direction by the grip of the first rib wall 140 by the first limiting base 271 and the second limiting base 272, and by the grip of the second rib wall 150 by the third limiting base 281 and the fourth limiting base 282.

According to some embodiments of this application, referring to FIG. 1, the first opening 111 communicates with the second opening 121. A relief hole 160 is created on the box body 100. The relief hole 160 communicates with the first opening 111. When the cylinder 330 enters the accommodation cavity 130 from the first opening 111, the second cap 320 enters the accommodation cavity 130 from the relief hole 160.

Referring to FIG. 1, because the second cap 320 needs to abut on the bottom of the ferrule 200, the diameter of the second cap 320 is generally greater than the width of the ferrule 200. However, the shape of the first opening 111 generally fits the ferrule 200. To enable the second cap 320 to also enter the accommodation cavity 130 from the first opening 111, a relief hole 160 needs to be created for entry of the second cap 320.

The relief holes 160 are created on both sides at the bottom of the first opening 111, and all the relief holes 160 communicate with the first opening 111, so that the second cap 320 enters the accommodation cavity 130 from the relief holes 160 when the ferrule 200 enters the accommodation cavity 130 from the first opening 111.

Understandably, the relief holes 160 may also be created on the first rib wall 140 and the second rib wall 150, so as to provide space for leading the second cap 320 in or out.

According to some embodiments of this application, this application further provides a battery. The battery includes the packaging box disclosed in any one of the foregoing technical solutions.

According to some embodiments of this application, this application further provides an electrical device. The electrical device includes the battery disclosed in the above technical solution. The battery is configured to provide electrical energy for the electrical device. The electrical device may be any device or system in which the battery is applied.

According to some embodiments of this application, referring to FIG. 1, in a packaging box provided in this application, the first strap 250 and the second strap 260 of the ferrule 200 are released, and the first snap portion 210 and the snap portion 220 are moved away from each other to open the clamping trough 240. The cylinder 330 of the sleeve 300 is placed in the clamping trough 240. The curved face portion 331 of the cylinder 330 fits the curved face of the bend portion 230. The first strap 250 is clasped onto the second strap 260, and the flat face portion 332 of the cylinder 330 is caused to fit snugly onto the first strap 250 and/or the second strap 260. The first snap portion 210 and the second snap portion 220 are pressed against each other so that the width of the ferrule 200 is reduced to a value less than the width of the first opening 111. The ferrule 200 is placed into the accommodation cavity 130 from the first opening 111, and the second cap 320 enters the accommodation cavity 130 from the two relief holes 160 at the bottom of the first opening 111. The first cap 310 is exposed on the outer surface of the second sidewall 120. The first snap portion 210 and the second snap portion 220 are released. The two fixing grooves 131 and 132 are disposed on the first sidewall 100. The first abutment portion 252 and the second abutment portion 262 abut on the inner surface of the first sidewall 110. The first limiting portion 270 is snap-fastened to the first rib wall 140, and the second limiting portion 280 is snap-fastened to the second rib wall 150. At this time, the second sidewall 120 is clamped between the second cap 320 and the ferrule 200, and the second cap 320 fits closely with the second sidewall 120 so that the sleeve 300 is fixed in the accommodation cavity 130. Finally, the vehicle frame and the sleeve 300 are fixed together by bolts, thereby completing the mounting of the packaging box.

## Claims

1. A packaging box, comprising:
a box body (100), in which an accommodation cavity (130), a first opening (111), and a second opening (121) are created, wherein both the first opening (111) and the second opening (121) communicate with the accommodation cavity (130);
a sleeve (300), comprising a cylinder (330), **characterized in that**
the packaging box further comprises a ferrule (200), and **in that**
the sleeve (300) further comprises a first cap (310), a second cap (320),
wherein the first cap (310) and the second cap (320) are connected to two ends of the cylinder (330) respectively, the cylinder (330) is configured to be snap-fastened to the ferrule (200), the first cap (310) and the second cap (320) protrude beyond the ferrule (200), the ferrule (200) is configured to be inserted into the accommodation cavity (130) from the first opening (111) and snap-fastened in the accommodation cavity (130), and the first cap (310) is configured to extend from the second opening (121) and be exposed outside the box body (100).

2. The packaging box according to claim 1, wherein the ferrule (200) comprises a first snap portion (210), a second snap portion (220), and a bend portion (230); and
two ends of the bend portion (230) are connected to the first snap portion (210) and the second snap portion (220) respectively, and the first snap portion (210), the bend portion (230), and the second snap portion (220) close in together to form a clamping trough (240) that is openable and closable, and the cylinder (330) is configured to be snap-fastened in the clamping trough (240).

3. The packaging box according to claim 2, wherein the ferrule (200) comprises a first strap (250) and a second strap (260);
one end of the first strap (250) is connected to the first snap portion (210), another end of the first strap (250) extends toward the clamping trough (240), and a snap slot (251) is created on the first strap (250); and
one end of the second strap (260) is connected to the second snap portion (220), another end of the second strap (260) extends toward the clamping trough (240), a protruding portion (261) is disposed protrusively on the second strap (260), and the protruding portion (261) is configured to be snap-fastened in the snap slot (251) so that the first strap (250) is snap-fastened to the second strap (260).

4. The packaging box according to claim 3, wherein the first strap (250) is bent toward a bottom of the clamping trough (240), and the second strap (260) is bent toward the bottom of the clamping trough (240).

5. The packaging box according to claim 3, wherein, along a direction in which the clamping trough (240) is opened or closed, a length of the snap slot (251) is greater than a length of the protruding portion (261), and the protruding portion (261) is movable along the snap slot (251).

6. The packaging box according to claim 3, wherein a sidewall of the cylinder (330) comprises a curved face portion (331) and a flat face portion (332); and
an inner wall of the bend portion (230) fits the curved face portion (331), and, when the cylinder (330) is snap-fastened to the clamping trough (240), the curved face portion (331) of the cylinder (330) fits snugly with the inner wall of the bend portion (230), and the flat face portion (332) of the cylinder (330) fits snugly with the first strap (250) and/or the second strap (260).

7. The packaging box according to any one of claims 2 to 6, wherein a first abutment portion (252) extends from an end of the first snap portion (210), the end being oriented back from the bend portion (230), and the first abutment portion (252) is bent away from the clamping trough (240);
a second abutment portion extends from an end of the second snap portion (220), the end being oriented back from the bend portion (230), and the second abutment portion is bent away from the clamping trough (240); and
a first fixing groove (131) and a second fixing groove (132) are created in the accommodation cavity (130), and, when the ferrule (200) is snap-fastened in the accommodation cavity (130), the first abutment portion (252) is inserted into the first fixing groove (131), and the second abutment portion is inserted into the second fixing groove (132).

8. The packaging box according to any one of claims 2 to 6, wherein the ferrule (200) further comprises a first limiting portion (270) and a second limiting portion (280);
the first limiting portion (270) is connected to the first snap portion (210) and protrudes beyond an end face of the first snap portion (210), the end face being oriented back from the clamping trough (240);
the second limiting portion (280) is connected to the second snap portion (220) and protrudes beyond an end face of the second snap portion (220), the end face being oriented back from the clamping trough (240);
a limiting wall is disposed in the accommodation cavity (130), and both the first limiting portion (270) and the second limiting portion (280) are snap-fastened to the limiting wall so that the ferrule (200) is fixed in the accommodation cavity (130).

9. The packaging box according to claim 8, wherein the first limiting portion (270) comprises a first limiting base (271) and a second limiting base (272) disposed opposite to each other, and a first limiting space exists between the first limiting base (271) and the second limiting base (272);
the second limiting portion (280) comprises a third limiting base (281) and a fourth limiting base (282) disposed opposite to each other, and a second limiting space exists between the third limiting base (281) and the fourth limiting base (282); and
the limiting wall comprises a first rib wall (140) and a second rib wall (150), the first rib wall (140) and the second rib wall (150) are disposed opposite to each other, and, when the ferrule (200) is snap-fastened in the accommodation cavity (130), the first rib wall (140) is snap-fastened in the first limiting space between the first limiting base (271) and the second limiting base (272), and the second rib wall (150) is snap-fastened in the second limiting space between the third limiting base (281) and the fourth limiting base (282).

10. The packaging box according to any one of claims 1 to 9, wherein the first opening (111) communicates with the second opening (121), a relief hole (160) is created on the box body (100), the relief hole (160) communicates with the first opening (111), and, when the cylinder (330) enters the accommodation cavity (130) from the first opening (111), the second cap (320) enters the accommodation cavity (130) from the relief hole (160).

11. The packaging box according to any one of claims 2 to 9, wherein the bend portion (230), the first snap portion (210), and the second snap portion (220) are all made of an elastic material.

12. The packaging box according to any one of claims 2 to 9, wherein a curvature of the bend portion (230) is set to match a curvature of an outer surface of the cylinder (330).

13. The packaging box according to any one of claims 1 to 9, wherein an overall width of the ferrule (200) is greater than a width of the first opening (111) and a width of the second opening (121) separately, and an overall length of the ferrule (200) is greater than a length of the second opening (121).

14. A battery, comprising the packaging box according to any one of claims 1 to 13.

15. An electrical device, comprising the battery according to claim 14.

## Patentansprüche

1. Gehäusekasten, umfassend:
einen Kastenkörper (100), in dem ein Aufnahmehohlraum (130), eine erste Öffnung (111) und eine zweite Öffnung (121) gebildet sind, wobei sowohl die erste Öffnung (111) als auch die zweite Öffnung (121) mit dem Aufnahmehohlraum (130) kommunizieren;
eine Hülse (300), die einen Zylinder (330) umfasst, **dadurch gekennzeichnet, dass**
der Gehäusekasten ferner eine Ferrule (200) umfasst, und dadurch, dass
die Hülse (300) ferner eine erste Kappe (310), eine zweite Kappe (320) umfasst,
wobei die erste Kappe (310) und die zweite Kappe (320) jeweils mit zwei Enden des Zylinders (330) verbunden sind, wobei der Zylinder (330) dazu ausgelegt ist, an der Ferrule (200) eingerastet zu sein, wobei die erste Kappe (310) und die zweite Kappe (320) über die Ferrule (200) hinausragen, wobei die Ferrule (200) dazu ausgelegt ist, von der ersten Öffnung (111) in den Aufnahmehohlraum (130) eingeführt und in dem Aufnahmehohlraum (130) eingerastet zu sein, und wobei die erste Kappe (310) dazu ausgelegt ist, sich von der zweiten Öffnung (121) zu erstrecken und außerhalb des Kastenkörpers (100) freizuliegen.

2. Gehäusekasten nach Anspruch 1, wobei die Ferrule (200) einen ersten Einrastabschnitt (210), einen zweiten Einrastabschnitt (220) und einen Biegeabschnitt (230) umfasst; und
wobei zwei Enden des Biegeabschnitts (230) jeweils mit dem ersten Einrastabschnitt (210) und dem zweiten Einrastabschnitt (220) verbunden sind, und wobei der erste Einrastabschnitt (210), der Biegeabschnitt (230) und der zweite Einrastabschnitt (220) sich zusammenschließen, um eine Klemmmulde (240) zu bilden, die öffenbar und verschließbar ist, und wobei der Zylinder (330) dazu ausgelegt ist, in der Klemmmulde (240) eingerastet zu sein.

3. Gehäusekasten nach Anspruch 2, wobei die Ferrule (200) eine erste Lasche (250) und eine zweite Lasche (260) umfasst;
wobei ein Ende der ersten Lasche (250) mit dem ersten Einrastabschnitt (210) verbunden ist, sich ein anderes Ende der ersten Lasche (250) zu der Klemmmulde (240) hin erstreckt und ein Einrastschlitz (251) auf der ersten Lasche (250) gebildet ist; und
wobei ein Ende der zweiten Lasche (260) mit dem zweiten Einrastabschnitt (220) verbunden ist, sich ein anderes Ende der zweiten Lasche (260) zu der Klemmmulde (240) hin erstreckt, ein vorstehender Abschnitt (261) vorstehend auf der zweiten Lasche (260) angeordnet ist und der vorstehende Abschnitt (261) dazu ausgelegt ist, in den Einrastschlitz (251) eingerastet zu sein, so dass die erste Lasche (250) an der zweiten Lasche (260) eingerastet ist.

4. Gehäusekasten nach Anspruch 3, wobei die erste Lasche (250) zu einem Boden der Klemmmulde (240) hin gebogen ist und die zweite Lasche (260) zu dem Boden der Klemmmulde (240) hin gebogen ist.

5. Gehäusekasten nach Anspruch 3, wobei entlang einer Richtung, in der die Klemmmulde (240) geöffnet oder geschlossen wird, eine Länge des Einrastschlitzes (251) größer als eine Länge des vorstehenden Abschnitts (261) ist und der vorstehende Abschnitt (261) entlang des Einrastschlitzes (251) beweglich ist.

6. Gehäusekasten nach Anspruch 3, wobei eine Seitenwand des Zylinders (330) einen gekrümmten Flächenabschnitt (331) und einen flachen Flächenabschnitt (332) umfasst; und
wobei eine Innenwand des Biegeabschnitts (230) an dem gekrümmten Flächenabschnitt (331) anliegt, und wobei, wenn der Zylinder (330) an der Klemmmulde (240) eingerastet ist, der gekrümmte Flächenabschnitt (331) des Zylinders (330) eng an der Innenwand des Biegeabschnitts (230) anliegt und der flache Flächenabschnitt (332) des Zylinders (330) eng an der ersten Lasche (250) und/oder der zweiten Lasche (260) anliegt.

7. Gehäusekasten nach einem der Ansprüche 2 bis 6, wobei sich ein erster Anlageabschnitt (252) von einem Ende des ersten Einrastabschnitts (210) erstreckt, das Ende von dem Biegeabschnitt (230) nach hinten ausgerichtet ist und der erste Anlageabschnitt (252) von der Klemmmulde (240) weg gebogen ist;
wobei sich ein zweiter Anlageabschnitt von einem Ende des zweiten Einrastabschnitts (220) erstreckt, das Ende von dem Biegeabschnitt (230) nach hinten ausgerichtet ist und der zweite Anlageabschnitt von der Klemmmulde (240) weg gebogen ist; und
wobei in dem Aufnahmehohlraum (130) eine erste Fixierungsnut (131) und eine zweite Fixierungsnut (132) gebildet sind, und wobei, wenn die Ferrule (200) in dem Aufnahmehohlraum (130) eingerastet ist, der erste Anlageabschnitt (252) in die erste Fixierungsnut (131) eingeführt ist und der zweite Anlageabschnitt in die zweite Fixierungsnut (132) eingeführt ist.

8. Gehäusekasten nach einem der Ansprüche 2 bis 6, wobei die Ferrule (200) ferner einen ersten Begrenzungsabschnitt (270) und einen zweiten Begrenzungsabschnitt (280) umfasst;
wobei der erste Begrenzungsabschnitt (270) mit dem ersten Einrastabschnitt (210) verbunden ist und über eine Endfläche des ersten Einrastabschnitts (210) vorsteht, wobei die Endfläche von der Klemmmulde (240) nach hinten ausgerichtet ist;
wobei der zweite Begrenzungsabschnitt (280) mit dem zweiten Einrastabschnitt (220) verbunden ist und über eine Endfläche des zweiten Einrastabschnitts (220) vorsteht, wobei die Endfläche von der Klemmmulde (240) nach hinten ausgerichtet ist;
wobei eine Begrenzungswand in dem Aufnahmehohlraum (130) angeordnet ist und sowohl der erste Begrenzungsabschnitt (270) als auch der zweite Begrenzungsabschnitt (280) an der Begrenzungswand eingerastet sind, so dass die Ferrule (200) in dem Aufnahmehohlraum (130) fixiert ist.

9. Gehäusekasten nach Anspruch 8, wobei der erste Begrenzungsabschnitt (270) eine erste Begrenzungsbasis (271) und eine zweite Begrenzungsbasis (272) umfasst, die einander gegenüberliegend angeordnet sind, und wobei ein erster Begrenzungsraum zwischen der ersten Begrenzungsbasis (271) und der zweiten Begrenzungsbasis (272) vorhanden ist;
wobei der zweite Begrenzungsabschnitt (280) eine dritte Begrenzungsbasis (281) und eine vierte Begrenzungsbasis (282) umfasst, die einander gegenüberliegend angeordnet sind, und wobei ein zweiter Begrenzungsraum zwischen der dritten Begrenzungsbasis (281) und der vierten Begrenzungsbasis (282) vorhanden ist; und
wobei die Begrenzungswand eine erste Rippenwand (140) und eine zweite Rippenwand (150) umfasst, wobei die erste Rippenwand (140) und die zweite Rippenwand (150) einander gegenüberliegend angeordnet sind, und wobei, wenn die Ferrule (200) in dem Aufnahmehohlraum (130) eingerastet ist, die erste Rippenwand (140) in dem ersten Begrenzungsraum zwischen der ersten Begrenzungsbasis (271) und der zweiten Begrenzungsbasis (272) eingerastet ist und die zweite Rippenwand (150) in dem zweiten Begrenzungsraum zwischen der dritten Begrenzungsbasis (281) und der vierten Begrenzungsbasis (282) eingerastet ist.

10. Gehäusekasten nach einem der Ansprüche 1 bis 9, wobei die erste Öffnung (111) mit der zweiten Öffnung (121 160) kommuniziert, wobei ein Entlastungsloch (160) auf dem Kastenkörper (100) gebildet ist, wobei das Entlastungsloch (160) mit der ersten Öffnung (111) kommuniziert, und wobei, wenn der Zylinder (330) von der ersten Öffnung (111) in den Aufnahmehohlraum (130) eintritt, die zweite Kappe (320) von dem Entlastungsloch in den Aufnahmehohlraum (130) eintritt.

11. Gehäusekasten nach einem der Ansprüche 2 bis 9, wobei der Biegeabschnitt (230), der erste Einrastabschnitt (210) und der zweite Einrastabschnitt (220) alle aus einem elastischen Material hergestellt sind.

12. Gehäusekasten nach einem der Ansprüche 2 bis 9, wobei eine Krümmung des Biegeabschnitts (230) so festgelegt ist, dass sie mit einer Krümmung einer Außenfläche des Zylinders (330) übereinstimmt.

13. Gehäusekasten nach einem der Ansprüche 1 bis 9, wobei eine Gesamtbreite der Ferrule (200) größer als eine Breite der ersten Öffnung (111) und eine Breite der zweiten Öffnung (121) separat ist und eine Gesamtlänge der Ferrule (200) größer als eine Länge der zweiten Öffnung (121) ist.

14. Batterie, die den Gehäusekasten nach einem der Ansprüche 1 bis 13 umfasst.

15. Elektrische Vorrichtung, die die Batterie nach Anspruch 14 umfasst.

## Revendications

1. Boîte d'enveloppe, comprenant :
un corps de boîte (100), dans lequel une cavité de logement (130), une première ouverture (111), et une seconde ouverture (121) sont créées, la première ouverture (111) et la seconde ouverture (121) communiquant toutes les deux la cavité de logement (130) ;
un manchon (300), comprenant un cylindre (330), **caractérisée en ce que**
la boîte d'enveloppe comprend en outre un étrier (200), et **en ce que**
le manchon (300) comprend en outre une première coiffe (310), une seconde coiffe (320),
la première coiffe (310) et la seconde coiffe (320) étant reliées à deux extrémités du cylindre (330) respectivement, le cylindre (330) étant configuré pour être assujetti par encliquetage à l'étrier (200), la première coiffe (310) et la seconde coiffe (320) faisant saillie au-delà de l'étrier (200), l'étrier (200) étant configuré pour être inséré dans la cavité de logement (130) depuis la première ouverture (111) et assujetti par encliquetage dans la cavité de logement (130), et la première coiffe (310) étant configurée pour s'étendre depuis la seconde ouverture (121) et être exposée à l'extérieur du corps de boîte (100).

2. Boîte d'enveloppe selon la revendication 1, dans laquelle l'étrier (200) comprend une première partie d'encliquetage (210), une seconde partie d'encliquetage (220), et une partie courbe (230) ; et
deux extrémités de la partie courbe (230) sont reliées à la première partie d'encliquetage (210) et à la seconde partie d'encliquetage (220) respectivement, et la première partie d'encliquetage (210), la partie courbe (230), et la seconde partie d'encliquetage (220) se rapprochent ensemble pour former un creux de serrage (240) qui est ouvrable et fermable, et le cylindre (330) est configuré pour être assujetti par encliquetage dans le creux de serrage (240).

3. Boîte d'enveloppe selon la revendication 2, dans laquelle l'étrier (200) comprend une première lame (250) et une seconde lame (260) ;
une extrémité de la première lame (250) est reliée à la première partie d'encliquetage (210), une autre extrémité de la première lame (250) s'étend vers le creux de serrage (240), et une fente d'encliquetage (251) est créée sur la première lame (250) ; et
une extrémité de la seconde lame (260) est reliée à la seconde partie d'encliquetage (220), une autre extrémité de la seconde lame (260) s'étend vers le creux de serrage (240), une partie saillante (261) est disposée de façon saillante sur la seconde lame (260), et la partie saillante (261) est configurée pour être assujettie par encliquetage dans la fente d'encliquetage (251) de telle sorte que la première lame (250) est assujettie par encliquetage à la seconde lame (260).

4. Boîte d'enveloppe selon la revendication 3, dans laquelle la première lame (250) est courbée vers un fond du creux de serrage (240), et la seconde lame (260) est courbée vers le fond du creux de serrage (240).

5. Boîte d'enveloppe selon la revendication 3, dans laquelle, le long d'une direction dans laquelle le creux de serrage (240) est ouvert ou fermé, une longueur de la fente d'encliquetage (251) est supérieure à une longueur de la partie saillante (261), et la partie saillante (261) est mobile le long de la fente d'encliquetage (251).

6. Boîte d'enveloppe selon la revendication 3, dans laquelle une paroi latérale du cylindre (330) comprend une partie de face arrondie (331) et une partie de face plate (332) ; et une paroi intérieure de la partie courbe (230) s'ajuste à la partie de face arrondie (331), et, lorsque le cylindre (330) est assujetti par encliquetage au creux de serrage (240), la partie de face arrondie (331) du cylindre (330) s'ajuste de façon serrée avec la paroi intérieure de la partie courbe (230), et la partie de face plate (332) du cylindre (330) s'ajuste de façon serrée avec la première lame (250) et/ou la seconde lame (260).

7. Boîte d'enveloppe selon l'une quelconque des revendications 2 à 6, dans laquelle une première partie de butée (252) s'étend depuis une extrémité de la première partie d'encliquetage (210), l'extrémité étant orientée à l'opposé de la partie courbe (230), et la première partie de butée (252) est courbée en éloignement du creux de serrage (240) ;
une seconde partie de butée s'étend depuis une extrémité de la seconde partie d'encliquetage (220), l'extrémité étant orientée à l'opposé de la partie courbe (230), et la seconde partie de butée est courbée en éloignement du creux de serrage (240) ; et
une première rainure de fixation (131) et une seconde rainure de fixation (132) sont créées dans la cavité de logement (130), et, lorsque l'étrier (200) est assujetti par encliquetage dans la cavité de logement (130), la première partie de butée (252) est insérée dans la première rainure de fixation (131), et la seconde partie de butée est insérée dans la seconde rainure de fixation (132).

8. Boîte d'enveloppe selon l'une quelconque des revendications 2 à 6, dans laquelle l'étrier (200) comprend en outre une première partie limitatrice (270) et une seconde partie limitatrice (280) ;
la première partie limitatrice (270) est reliée à la première partie d'encliquetage (210) et fait saillie au-delà d'une face d'extrémité de la première partie d'encliquetage (210), la face d'extrémité étant orientée à l'opposé du creux de serrage (240) ;
la seconde partie limitatrice (280) est reliée à la seconde partie d'encliquetage (220) et fait saillie au-delà d'une face d'extrémité de la seconde partie d'encliquetage (220), la face d'extrémité étant orientée à l'opposé du creux de serrage (240) ;
une paroi limitatrice est disposée dans la cavité de logement (130), et la première partie limitatrice (270) et la seconde partie limitatrice (280) sont toutes les deux assujetties par encliquetage à la paroi limitatrice de telle sorte que l'étrier (200) est fixé dans la cavité de logement (130).

9. Boîte d'enveloppe selon la revendication 8, dans laquelle la première partie limitatrice (270) comprend une première base limitatrice (271) et une deuxième base limitatrice (272) disposées l'une en face de l'autre, et un premier espace limitateur existe entre la première base limitatrice (271) et la deuxième base limitatrice (272) ;
la seconde partie limitatrice (280) comprend une troisième base limitatrice (281) et une quatrième base limitatrice (282) disposées l'une en face de l'autre, et un second espace limitateur existe entre la troisième base limitatrice (281) et la quatrième base limitatrice (282) ; et
la paroi limitatrice comprend une première paroi-nervure (140) et une seconde paroi-nervure (150), la première paroi-nervure (140) et la seconde paroi-nervure (150) sont disposées l'une en face de l'autre, et, lorsque l'étrier (200) est assujetti par encliquetage dans la cavité de logement (130), la première paroi-nervure (140) est assujettie par encliquetage dans le premier espace limitateur entre la première base limitatrice (271) et la deuxième base limitatrice (272), et la seconde paroi-nervure (150) est assujettie par encliquetage dans le second espace limitateur entre la troisième base limitatrice (281) et la quatrième base limitatrice (282).

10. Boîte d'enveloppe selon l'une quelconque des revendications 1 à 9, dans laquelle la première ouverture (111) communique avec la seconde ouverture (121), un trou en relief (160) est créé sur le corps de boîte (100), le trou en relief (160) communique avec la première ouverture (111), et, lorsque le cylindre (330) entre dans la cavité de logement (130) à partir de la première ouverture (111), la seconde coiffe (320) entre dans la cavité de logement (130) à partir du trou en relief (160).

11. Boîte d'enveloppe selon l'une quelconque des revendications 2 à 9, dans laquelle la partie courbe (230), la première partie d'encliquetage (210), et la seconde partie d'encliquetage (220) sont toutes faites d'une matière élastique.

12. Boîte d'enveloppe selon l'une quelconque des revendications 2 à 9, dans laquelle une courbure de la partie courbe (230) est réglée pour coïncider avec une courbure d'une surface extérieure du cylindre (330).

13. Boîte d'enveloppe selon l'une quelconque des revendications 1 à 9, dans laquelle une largeur totale de l'étrier (200) est supérieure à une largeur de la première ouverture (111) et à une largeur de la seconde ouverture (121) séparément, et une longueur totale de l'étrier (200) est supérieure à une longueur de la seconde ouverture (121).

14. Batterie, comprenant la boîte d'enveloppe selon l'une quelconque des revendications 1 à 13.

15. Dispositif électrique, comprenant la batterie selon la revendication 14.
